# EUROPEAN PATENT SPECIFICATION

(11) **EP 0 444 227 B1**
(45) Date of publication and mention of the grant of the patent: **17.05.1995**
(21) Application number: 90103851.3
(22) Date of filing: 28.02.1990
(51) Int. Cl.: B41F 33/00, B41F 7/10

(54) **Safety device for printing machine**
Sicherheitsvorrichtung für eine Druckmaschine
Dispositif de securité pour une machine à imprimer

(43) Date of publication of application: 04.09.1991
(73) Proprietor: Komori Corporation, Sumida-ku Tokyo (JP)
(72) Inventor: Funada, Hitoshi c/o Komori Printing Mach. Co., Ltd, Higashikatsushika-gun Chiba-ken (JP); Ojima, Toshi c/o Komori Printing Mach. Co., Ltd., Ibaragi-ken (JP)
(74) Representative: UEXKÜLL & STOLBERG

(56) References cited:
- EP-A- 0 186 862
- US-A- 3 953 770
- US-A- 4 744 307

## Description

### 〈Field of the Invention〉

The present invention relates to a safety device for printing machines, and particularly to a safety device of a type effectively applied to a printing machine of such a type that an ink device unit is moved to and away from the body of the printing machine.

### 〈Description of the Prior Art〉

In a multiple color printing machine adapted to be used for printing banknotes, bonds or the like, a plurality of plate cylinders are arranged around blanket cylinders in a satellite configuration. Such a kind of printing machines have a complicated structure using a plurality of plate cylinders vertically arranged, so that a suitable working space should be ensured by separating an ink device for supplying ink to the plate cylinders apart from a printing machine body in order to enhance the workability during replacement of printing plates, cleaning of the machine and so forth. Heretofore, there has been proposed a printing machine in which an ink device can be moved to and away from a printing machine body in order to easily mount and remove the ink device unit as described e.g. in EP-A-186 862.

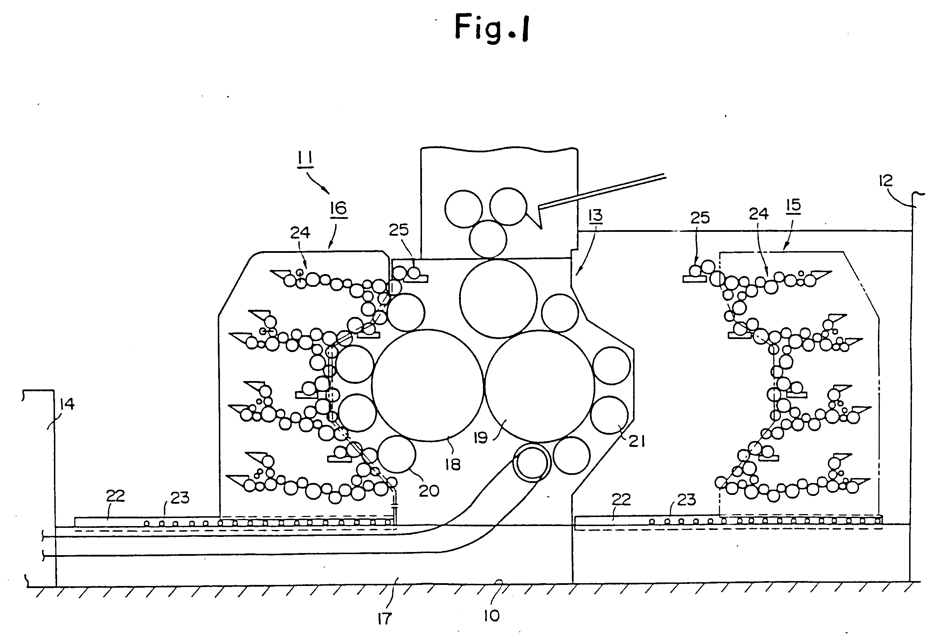

Fig. 1 is a schematic view showing an ink device unit movable type printing machine of the above-mentioned kind. As shown in Fig. 1, this printing machine 11 comprises a paper feed device 12, a printing machine body 13, a paper discharge device 14, a paper feed side ink device unit 15, a paper discharge side ink device unit 16, the paper feed device 12 and the paper discharge device 13 being coupled together by means of a pair of left and right beds 17 which are laid on a floor surface 10. In the printing machine body 13, blanket cylinders 18, 19 are journalled in a juxtaposed relation and are rotated by a main motor (which is not shown), and a plurality of plate cylinders 20, 21 which are similarly rotated by the main motor are arranged around the peripheral surfaces of the blanket cylinders 18, 19 in a satellite configuration, each blanket cylinder being contiguous with four plate cylinders.

The paper feed side ink device unit 15 and the paper discharge side ink device unit 16 arranged on both sides of the printing machine body 13, are set on rails 22 which are laid on the beds 17, respectively, through the intermediary of several rolls 23, and accordingly, they can be moved along the rails 22 to and from the printing machine body 13. Each of the ink device units 15, 16 comprises a plurality of ink devices 24 and a plurality of water feed devices 25, which are associated with the plurality of plate cylinders 20, 21. These ink devices 24 and water feed devices 25 have their final rollers which are made to be contiguous with the plate cylinders 20, 21 when the ink device unit 15, 16 are moved to and then coupled with the printing machine body 13. Thus, the above-mentioned final rollers are made to be contiguous with the plate cylinders 21, 20 which are therefore fed with ink during printing.

Incidentally, the above-mentioned printing machine is adapted to print on both side surfaces of a sheet, simultaneously at one time, and accordingly, the ink device units 15, 16 are arranged on both sides of the printing machine body 13, respectively. However, in the case of a printing machine of a type in which only one side surface of a sheet is printed, it is sufficient to arrange only one ink device unit on one side of the printing machine body.

In the above-mentioned printing machine, during preparation of printing, such as replacement of printing plates, positional alignment, cleaning of the printing machine body, cleaning of the ink device units 15, 16, run-in operation or the like, the ink device units 15, 16 are retracted so as to be moved away from the printing machine body 13. Meanwhile, during printing operation, the ink device units 15, 16 are advanced toward the printing machine body 13 from the above-mentioned position so as to be coupled with the printing machine body 13.

In the above-mentioned arrangement, an electrical motor, a hydraulic cylinder or the like is usually used as a drive source for extending and retracting the ink device units 15, 16, and operating buttons for controlling the drive source is arranged in the front of the printing machine body 13. In particular, in a large size printing machine having this arrangement, which is handled by a plurality of operators who manipulate the printing machine, simultaneously, there is such a risk that an operator accidentally moves the ink device units 15, 16 even though there are operators working in front and rear of the ink device units 15, 16. If the ink device units 15, 16 are moved when operators works in front and rear of the ink device units 15, 16, the units bumps upon the operators who are therefore caught between the ink device units 15, 16 and the printing machine body 13 in the worst case.

In order to avoid incurring the above-mentioned risk, a warning buzzer is energized during movement of the ink device units 15, 16, or control is made in such a way that the ink device units 15, 16 are once stopped at positions which are 300 mm distant to the extremities of the advancing and retracting strokes thereof.

However, there is a possibility of such a risk that operators fail to escape in the case of the warning buzzer since the buzzer issues an alarm simultaneously with the movement of the ink device units 15, 16. Further, there is a possibility of a bump upon the ink device units 15, 16 at positions before and after the once stopping positions in the case of the one-stop control since the one-stop control is effective only at the once stopping position. Further, the operating buttons should be again operated while visually observing the destinations of the ink device units 15, 16. Accordingly, this operation of the printing machine gives a troublesome work.

Further, the preparation works for printing include, in addition to the above-mentioned works, adjustment for an incorrect paper detecting device, adjustment to the speed of a suction wheel, the pressure of air and the like, which are carried out while rotating the blanket cylinders 18, 19, the plate cylinders 20, 21 and the like. At this time, the cylinders 18, 19, 20, 21 are rotated at high speeds, being exposed directly to the operators, and accordingly, there is a possibility of an accident such that the operators are caught between the cylinders.

In order to prevent the above-mentioned accident, the provision of covers surrounding the cylinders 18, 19, 20, 21 have been proposed. However, in this case, the covers should be removed before the ink device units 15, 16 being coupled with the printing machine body 13, and accordingly, the removal of the covers is troublesome.

Further, in order to prevent the above-mentioned accident, it has been also proposed to control the main motor so that the cylinders 18, 19, 20, 21 are rotated at high speeds only after the ink device units 15, 16 are coupled with the printing machine body 13. Even with this case, the ink device units 15, 16 should be coupled with the printing machine body 13 each time when the cylinders 18, 19, 20, 21 are rotated during preparation of printing, and accordingly, the working efficiency is lowered.

### Summary of the Invention

The present invention is devised in view of the above-mentioned problems inherent to the prior art, and accordingly a first object of the present invention is to provide a safety device for printing machines, which can prevent such an accident caused by rotation of printing cylinders during any of various kinds of preparation of printing in such a condition ink device units are made apart from a printing machine body.

A second object of the present invention is to provide a safety device which can prevent accident from occurring during movement of the ink device units.

To the end, according to the present invention, there is provided a safety device for a printing machine in which an ink unit device for supplying ink to a printing machine body having plate cylinders and the like adapted to be driven by a main motor, is arranged so as to be moved in a horizontal direction by a moving means to and from the printing machine body, characterized by a sensor disposed below the ink device unit during the ink device unit being coupled with the printing machine body, for detecting the presence of an operator who exists on said sensor;
a control means for locking the drive of the above-mentioned main motor when the above-mentioned sensor detects the presence of the operator on said sensor;
sensors disposed respectively at positions below the ink device unit during coupling with the printing machine body and below the same during being apart from the printing machine body, for detecting the presence of an operator at the positions ;
a lock means for locking the drive of the moving means when the above-mentioned sensors detect the presence of the operator.

### 〈Brief Description of the Drawings〉

Fig. 1 is a view illustrating a conventional printing machine;
Fig. 2 is a concenptionally explanatory view illustrating a printing machine to which an embodiment of the present invention is applied; and
Fig. 3 is a block diagram view explaining the embodiment of the present invention shown in Fig. 1.

### 〈Detailed Description of Preferred Embodiment〉

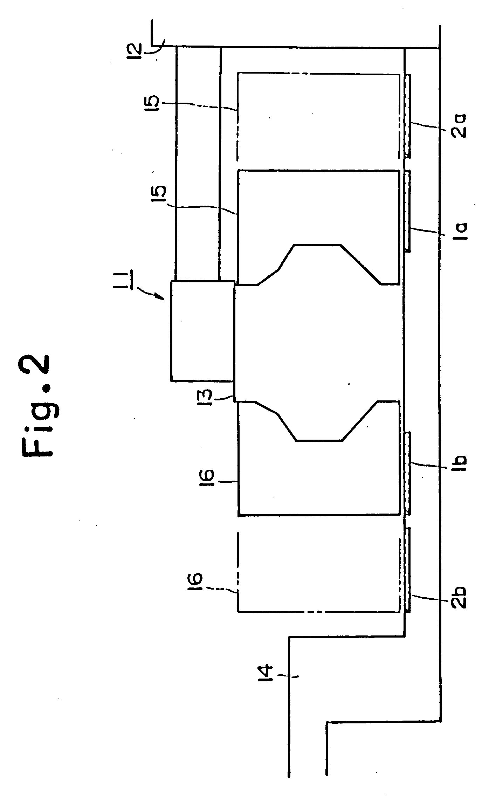

An embodiment of the present invention will be hereinbelow detailed with reference to the accompanying drawings. Referring to Fig. 2 in which the like reference numeral are used to denote the like parts to those shown in Fig. 1 which shows the arrangement of the prior art of the present invention, mat switches 1a, 1b are located respectively at positions below ink device units 15, 16 during the ink device units 15, 16 being coupled with a printing machine body 13, and are adapted to be turned on if operators or the like exist at the positions so as to detect the presence of the operators on the mat switches 1a, 1b. Mat switches 2a, 2b are disposed respectively at positions below the ink device units 15, 16 which are made apart from the printing machine body 13, and are adapted to be turned on if operators or the like exist at the positions so as to detect the presence of the operators on, the mat switches 2a, 2b.

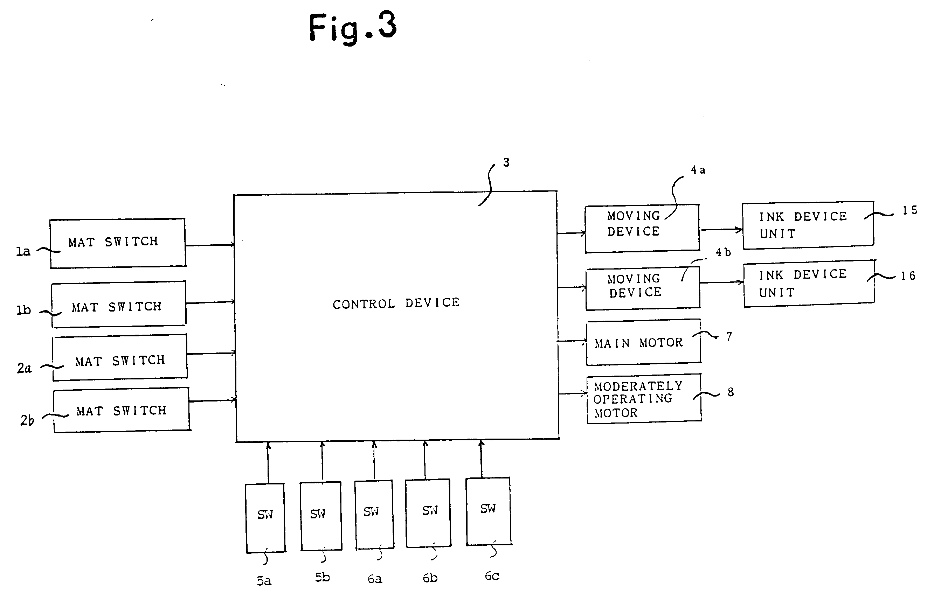

Fig. 3 is a block diagram explaining the safe device in this embodiment. As shown, a control device 3 inhibits the drive of moving devices 4a, 4b when an operator stands on any one of the above-mentioned mat switches 1a, 1b, 2a, 2b, which is therefore turned on, but allows the drive of the moving devices 4a, 4b when push button switches 5a, 5b are manipulated if it is in a condition other than that the above-mentioned condition of inhibition is established. In order to enhance the working efficiency, the logic of this lock condition is selected such that the ink device units 15, 16 are allowed to be moved rearward (toward the sides remote from the printing machine body 13) in the case of the presence of the operator in front of (on the printing machine body 13 side) of the ink device units 15, 16, that is, during turn-on of the mat switches 1a, 1b, and that the ink device units 15, 16 are allowed to be moved forward (toward the printing machine body 13) in the case of the present of the operator in rear of the ink device units 15, 16, that is, during turn-on of the mat switches 2a, 2b. Accordingly, the drive of the moving devices 4a, 4b is inhibited only when each of the mat switches 1a, 1b, 2a, 2b on the way of the advance of the associated ink device unit is turned on.

An electric motor, a hydraulic cylinder or the like is used for each of the moving devices 4a, 4b, and is adapted to move forward the associated one of the ink device units 15, 16 when the above-mentioned condition of inhibition is not established, in response to the manipulation of the push button switch 5a while it is adapted to move rearward the same in response to the manipulation of the push button switch 5b.

The control device 3 inhibits the drive of the main motor 7 when either one of the mat switches 1a, 1b is turned on, but drives the main motor 7 in response to the manipulation of push button switches 6a, 6b if it is in a condition other than that the above-mentioned condition of inhibition is established.

The main motor 7 is rotated at a high speed upon manipulation of the push button switch 6a but at a low speed upon manipulation of the push button switch 6b so as to rotate the blanket cylinders 18, 19 and the plate cylinders 20, 21 at predetermined speeds, respectively.

The printing machine 11 includes a moderately operating motor 8 in addition to the main motor 7, which is driven for preparation of printing such as replacement of printing plates, positioning and the like. In more detail, when a push button switch 6c is manipulated, the moderately operating motor 8 is rotated continuously or steppingly. However, the control device controls the motor 8 in such a way that the continuous or stepping operation of the motor 8 is caused only by manipulation of the push button switch 6c, irrespective of the conditions of the mat switches 1a, 1b. The rotational speed of the moderately operating motor 8 which rotates the blanket cylinders 18, 19 and the plate cylinders 20, 21, is greatly lower than that of the main motor 7, and accordingly, even if the operator exist at a position between one of the ink device units 15, 16 and the printing machine body 13, confronting either one of the cylinders 18, 19, 20, 21, that is, a position where any of the mat switches 1a, 1b is turned on, there is substantially no possibility of occurrence of a risk. It is, rather, necessary that the operators stay at positions at which the mat switches are turned in order to moderately or steppingly rotate the cylinders 18, 19, 20, 21 on during preparation of printing such as replacement of printing plates or positioning. The transmission of torques of the main motor 7 and the moderately operating motor 8 to the cylinders 18, 19, 20, 21 is changed over by means of suitable transmission changeover means such as electromagnetic clutches or the like which are not shown.

According to the arrangement of this embodiment, the presence of the operators in rear of the ink device units 15, 16 is detected by the mat switches 2a, 2b which are turned on, while the presence of the operators in front of the ink device units 15, 16 are detected by the mat switches 1a, 1b which are turned on. Further, in these cases, the advance and the retraction of the ink device unit 15, 16 are inhibited even though the push button switches 5a, 5b are operated.

When the ink device units 15, 16 are apart from the printing machine body 13, if an operator exists at any one of positions between the ink device units 15, 16 and the printing machine body 13, confronting the cylinders 18, 19, 20, 21, that is, positions in front of the ink device units 15, 26, the mat switches 1a, 1b detects this matter so as to inhibit the drive of the main motor 7. Accordingly, even though the push button switches 6a, 6b are operated in this condition, the main motor 7 is not rotated. Meanwhile, when the push button 6c is operated, the moderately operating motor 8 is rotated even though the mat switches 1a, 1b are energized, and accordingly, the cylinders 18, 19, 20, 21 are moderately or steppingly rotated.

It is a matter of course that switches other than the mat switches 1a, 1b, 2a, 2b which can detect the present of an operator in front or rear of the ink device units 15, 16, as explained above, having functions similar to the latter may be also used instead.

Further, in the above-mentioned embodiment, it has been explained that the drive of the moving devices 4a, 4b is inhibited only when an operator exists in the direction of advance of the ink device unit 15 or 16. However, the inhibition of the drive of the moving devices 4a, 4b may be made, irrespective of the directions of movement of the ink device units 15, 16, when any one of the mat switches 1a, 1b, 2a, 2b is operated.

With the arrangement according to the present invention, as specifically explained hereinabove, when an operator exists between the ink device units and the printing machine body, the drive of the main motor is inhibited, and accordingly, accidents such as that the operator is caught by the cylinders in the printing machine body, can be prevented.

Further, with the arrangement according to the present invention, when an operator exists in the direction of advance of the ink device unit, the movement of the latter is inhibited, and accordingly, accidents such as that the operator is caught by the ink device unit on movement, can be prevented.

## Claims

1. A safety system for a printing press (11) having a horizontally stationary printing head (13) including at least one pair of cylinders (18 - 21), at least one inking unit (15, 16) mounted for movement between an advanced operative position relative to said printing head (13), and a retracted position relative to said printing head (13), a first high-speed motor (7) for driving said pair of cylinders, bi-directional drive means (4a, 4b) for advancing and retracting said inking unit (15, 16), and a second low-speed motor (8) for indexing said at least one pair of cylinders, said safety system further comprising
a first sensor (1a, 1b) operative to detect the presence of an operator interposed between said printing head (13) and said inking unit (15, 16) when said inking unit is other than in a fully advanced position; and
a switching control (3, 5a, 5b, 6a, 6b, 6c) operatively connected to said first high-speed motor (7), to said bi-directional drive means (4a, 4b), to said second low-speed indexing motor (8), and to said first sensor (1a, 1b);
wherein said switching control (3, 5a, 5b, 6a, 6b, 6c) is selectively operative to enable said first motor (7) in the absence of actuation of said first sensor (1a, 1b);
said switching control (3, 5a, 5b, 6a, 6b, 6c) is operative to disable said drive means (4a, 4b) in the advance direction in the presence of actuation of said first sensor (1a, 1b), and said switching control (3, 5a, 5b, 6a, 6b, 6c) is operative to enable said second low-speed indexing motor (8).

2. A safety system for a printing press (11) having a horizontally stationary printing head (13) including at least one pair of cylinders (18-21), at least one inking unit (15, 16) mounted for movement between an advanced operative position relative to said printing head (13), and a retracted position relative to said printing head (13), a first high-speed motor (7) for driving said pair of cylinders, bi-directional drive means (4a, 4b) for advancing and retracting said inking unit (15, 16), and a second low-speed motor (8) for indexing said at least one pair of cylinders, said safety system further comprising
a first sensor (1a, 1b) operative to detect the presence of an operator interposed between said printing head (13) and said inking unit (15, 16) when said inking unit is other than in a fully advanced position; and
a second sensor (2a, 2b) operative to detect the presence of an operator positioned behind said inking unit (15, 16) when said inking unit (15, 16) is other than in a fully retracted position, and
a switching control (3, 5a, 5b) operatively connected to said bi-directional drive means (4a, 4b), to said first sensor (1a, 1b) and to said second sensor (2a, 2b);
wherein said switching control (3, 5a, 5b) is operative to disable said drive means (4a, 4b) in the advance direction in the presence of actuation of said first sensor (1a, 1b), while permitting operation of said drive means (4a, 4b) in the retract direction and
said switching control (3, 5a, 5b) is operative to disable said drive means (4a, 4b) in the retract direction in the presence of actuation of said second sensor (2a, 2b), while permitting operation of said drive means (4a, 4b) in the advance direction.

3. A safety system according to claim 1, characterized by a second sensor (2a, 2b) operative to detect the presence of an operator positioned behind said inking unit (15, 16) when said inking unit (15, 16) is other than in a fully retracted position,
said switching control (3, 5a, 5b, 6a, 6b, 6c) being further operatively connected to said second sensor (2a, 2b),
wherein said switching control (3, 5a, 5b, 6a, 6b, 6c) is operative to disable said drive means (4a, 4b) in the advance direction in the presence of actuation of said first sensor (1a, 1b), while permitting operation of said drive means (4a, 4b) in the retract direction, and
said switching control (3, 5a, 5b, 6a, 6b, 6c) is operative to disable said drive means (4a, 4b) in the retract direction in the presence of actuation of said second sensor (2a, 2b), while permitting operation of said drive means (4a, 4b) in the advance direction.

4. A safety system according to one of the preceding claims, characterized in that said first and/or second sensor (1a, 1b, 2a, 2b) is a mat switch which is turned on when it is exposed to a load.

## Patentansprüche

1. Sicherheitssystem für eine Druckpresse (11) mit einem horizontal stationären Druckkopf (13), der wenigstens ein Paar Zylinder (18 bis 21) aufweist, wenigstens einer Druckfarbeneinheit (15, 16), die zur Bewegung zwischen einer relativ zu dem Druckkopf (13) vorgeschobenen Betriebsposition und einer relativ zu dem Druckkopf (13) zurückgezogenen Position montiert ist, einem ersten Motor (7) hoher Geschwindigkeit zum Antreiben des Paars Zylinder, bidirektionalen Antriebseinrichtungen (4a, 4b) zum Vorbewegen und Zurückziehen der Druckfarbeneinheit (15, 16) und einem zweiten Motor (8) niedriger Geschwindigkeit zum Schalten des wenigstens einen Paars Zylinder, wobei das Sicherheitssystem ferner aufweist
einen ersten Sensor (1a, 1b), der betriebsfähig ist, das Vorhandensein einer Bedienungsperson zwischen dem Druckkopf (13) und der Druckfarbeneinheit (15, 16) zu erfassen, wenn die Druckfarbeneinheit in einer anderen als in einer vollständig vorgeschobenen Position ist; und
eine Schaltsteuerung (3, 5a, 5b, 6a, 6b, 6c), die betriebsfähig mit dem ersten Motor (7) hoher Geschwindigkeit, mit den bidirektionalen Antriebseinrichtungen (4a, 4b), mit dem zweiten Schaltmotor (8) niedriger Geschwindigkeit und mit dem ersten Sensor (1a, 1b) verbunden ist;
wobei die Schaltsteuerung (3, 5a, 5b, 6a, 6b, 6c) selektiv betriebsfähig ist, in Abwesenheit der Betätigung des ersten Sensors (1a, 1b) den ersten Motor (7) freizugeben;
wobei die Schaltsteuerung (3, 5a, 5b, 6a, 6b, 6c) betriebsfähig ist, um beim Vorliegen der Betätigung des ersten Sensors (1a, 1b) die Antriebseinrichtungen (4b, 4b) in der Vorschubrichtung zu deaktivieren, und
wobei die Schaltsteuerung (3, 5a, 5b, 6a, 6b, 6c) betriebsfähig ist, den zweiten Schaltmotor (8) niedriger Geschwindigkeit freizugeben.

2. Sicherheitssystem für eine Druckpresse (11) mit einem horizontal stationären Druckkopf (13), der wenigstens ein Paar Zylinder (18 bis 21) aufweist, wenigstens einer Druckfarbeneinheit (15, 16), die zur Bewegung zwischen einer relativ zu dem Druckkopf (13) vorgeschobenen Betriebsposition und einer relativ zu dem Druckkopf (13) zurückgezogenen Position montiert ist, einem ersten Motor (7) hoher Geschwindigkeit zum Antreiben des Paars Zylinder, bidirektionalen Antriebseinrichtungen (4a, 4b) zum Vorbewegen und Zurückziehen der Druckfarbeneinheit (15, 16) und einem zweiten Motor (8) niedriger Geschwindigkeit zum Schalten des wenigstens einen Paars Zylinder, wobei das Sicherheitssystem ferner aufweist
einen ersten Sensor (1a, 1b), der betriebsfähig ist, das Vorhandensein einer Bedienungsperson zwischen dem Druckkopf (13) und der Druckfarbeneinheit (15, 16) zu erfassen, wenn die Druckfarbeneinheit in einer anderen als in einer vollständig vorgeschobenen Position ist; und
einen zweiten Sensor (2a, 2b), der betriebsfähig ist, das Vorhandensein einer Bedienungsperson hinter der Druckfarbeneinheit (15, 16) zu erfassen, wenn die Druckfarbeneinheit (15, 16) in einer anderen als in einer vollständig zurückgezogenen Position ist, und
eine Schaltsteuerung (3, 5a, 5b), die betriebsfähig mit den bidirektionalen Antriebseinrichtungen (4a, 4b), dem ersten Sensor (1a, 1b) und dem zweiten Sensor (2a, 2b) verbunden ist;
wobei die Schaltsteuerung (3, 5a, 5b) betriebsfähig ist, die Antriebseinrichtungen (4a, 4b) beim Vorliegen der Betätigung des ersten Sensors (1a, 1b) in der Vorschubrichtung zu deaktivieren, während ein Betrieb der Antriebseinrichtungen (4a, 4b) in der Rückzugsrichtung erlaubt wird, und
wobei die Schaltsteuerung (3, 5a, 5b) betriebsfähig ist, die Antriebseinrichtungen (4a, 4b) beim Vorliegen einer Betätigung des zweiten Sensors (2a, 2b) in der Rückzugsrichtung zu deaktivieren, während ein Betrieb der Antriebseinrichtungen (4a, 4b) in der Vorschubrichtung zugelassen wird.

3. Sicherheitssystem nach Anspruch 1, **gekennezeichnet durch**
einen zweiten Sensor (2a, 2b), der betriebsfähig ist, das Vorhandensein einer Bedienungsperson hinter der Druckfarbeneinheit (15, 16) zu erfassen, wenn die Druckfarbeneinheit (15, 16) in einer anderen als einer vollständig zurückgezogenen Position ist,
wobei die Schaltsteuerung (3, 5a, 5b, 6a, 6b, 6c) ferner betriebsfähig mit dem zweiten Sensor (2a, 2b) verbunden ist,
wobei die Schaltsteuerung (3, 5a, 5b, 6a, 6b, 6c) betriebsfähig ist, die Antriebseinrichtungen (4a, 4b) beim Vorliegen einer Betätigung des ersten Sensors (1a, 1b) in der Vorschubrichtung zu deaktivieren, während ein Betrieb der Antriebseinrichtungen (4a, 4b) in der Rückzugsrichtung zugelassen wird, und
wobei die Schaltsteuerung (3, 5a, 5b, 6a, 6b, 6c) betriebsfähig ist, die Antriebseinrichtungen (4a, 4b) beim Vorliegen einer Betätigung des zweiten Sensors (2a, 2b) in der Rückzugsrichtung zu deaktivieren, während ein Betrieb der Antriebseinrichtungen (4a, 4b) in der Vorschubrichtung zugelassen wird.

4. Sicherheitssystem nach einem der vorhergehenden Ansprüche, **dadurch gekennzeichnet**, daß der erste und/oder zweite Sensor (1a, 1b, 2a, 2b) ein Mattenschalter ist, der eingeschaltet wird, wenn er einer Belastung ausgesetzt ist.

## Revendications

1. Système de sécurité par une machine à imprimer (11) comprenant une tête d'impression stationnaire et horizontale (13) comportant au moins une paire de cylindres (18 - 21), au moins une unité d'encrage (15, 16) montée de façon à se déplacer entre une position opérationnelle avancée par rapport à ladite tête d'impression (13), et une position rétractée par rapport à ladite tête d'impression (13), un premier moteur à grande vitesse (7) pour entraîner ladite paire de cylindres, des moyens d'entraînement bidirectionnels (4a, 4b) pour faire avancer et rétracter ladite unité d'encrage (15, 16) et un second moteur à faible vitesse (8) pour indexer ladite au moins une paire de cylindres, ledit système de sécurité comprenant en outre:
un premier capteur (1a, 1b) apte à détecter la présence d'un opérateur interposé entre ladite tête d'impression (13) et ladite unité d'encrage (15, 16) quand ladite unité d'encrage se trouve dans une position autre que la position totalement avancée; et
une commande de commutation (3, 5a, 5b, 6a, 6b, 6c) reliée opérationnellement audit premier moteur à grande vitesse (7), auxdits moyens d'entraînement bidirectionnels (4a, 4b), audit second moteur d'indexation à faible vitesse (8) et audit premier capteur (1a, 1b);
dans lequel ladite commande de commutation (3, 5a, 5b, 6a, 6b, 6c) est sélectivement opérationnelle pour habiliter ledit premier moteur (7) en l'absence de l'actionnement dudit premier capteur (1a, 1b);
ladite commande de commutation (3, 5a, 5b, 6a, 6b, 6c) est apte à déshabiliter lesdits moyens d'entraînement (4a, 4b) dans la direction de l'avance en présence de l'excitation dudit premier capteur (1a, 1b), et
ladite commande de commutation (3, 5a, 5b, 6a, 6b, 6c) est apte à habiliter ledit second moteur d'indexation à faible vitesse (8).

2. Système de sécurité pour machine à imprimer (11) comprenant une tête d'impression stationnaire et horizontale (13) comportant au moins une paire de cylindres (18 - 21), au moins une unité d'encrage (15, 16) montée de façon à se déplacer entre une position opérationnelle avancée par rapport à ladite tête d'impression (13), et une position rétractée par rapport à ladite tête d'impression (13), un premier moteur à grande vitesse (7) pour entraîner ladite paire de cylindres, des moyens d'entraînement bidirectionnels (4a, 4b) pour faire avancer et rétracter ladite unité d'encrage (15, 16) et un second moteur à faible vitesse (8) pour indexer ladite au moins une paire de cylindres, ledit système de sécurité comprenant en outre:
un premier capteur (1a, 1b) apte à détecter la présence d'un opérateur interposé entre ladite tête d'impression (13) et ladite unité d'encrage (15, 16) quand ladite unité d'encrage se trouve dans une position autre que la position totalement avancée; et
un second capteur (2a, 2b) apte à détecter la présence d'un opérateur disposé à l'arrière de ladite unité d'encrage (15, 16) quand ladite unité d'encrage (15, 16) se trouve dans une position autre que la position totalement rétractée, et
une commande de commutation (3, 5a, 5b) reliée opérationnellement auxdits moyens d'entraînement bidirectionnels (4a, 4b), audit premier capteur (1a, 1b) et audit second capteur (2a, 2b);
dans lequel ladite commande de commutation (3, 5a, 5b) est apte à déshabiliter lesdits moyens d'entraînement (4a, 4b) dans la direction de l'avance en présence de l'excitation dudit premier capteur (1a, 1b) tout en permettant le fonctionnement desdits moyens d'entraînement (4a, 4b) dans la direction de la rétraction et
ladite commande de commutation (3, 5a, 5b) est apte à déshabiliter lesdits moyens d'entraînement (4a, 4b) dans la direction de la rétraction en présence de l'excitation dudit second capteur (2a, 2b), tout en permettant le fonctionnement desdits moyens d'entraînement (4a, 4b) dans la direction de l'avance.

3. Système de sécurité selon la revendication 1, caractérisé par:
un second capteur (2a, 2b) apte à détecter la présence d'un opérateur disposé à l'arrière de ladite unité d'encrage (15, 16) quand ladite unité d'encrage (15, 16) se trouve dans une position autre que la position totalement rétractée, et
ladite commande de commutation (3, 5a, 5b, 6a, 6b, 6c) est en outre reliée opérationnellement audit second capteur (2a, 2b),
dans lequel ladite commande de commutation (3, 5a, 5b, 6a, 6b, 6c) est apte à déshabiliter lesdits moyens d'entraînement (4a, 4b) dans la direction de l'avance en présence d'une excitation dudit premier capteur (1a, 1b), tout en permettant le fonctionnement desdits moyens d'entraînement (4a, 4b) dans la direction de la rétraction, et
ladite commande de commutation (3, 5a, 5b, 6a, 6b, 6c) est apte à déshabiliter lesdits moyens d'entraînement (4a, 4b) dans la direction de la rétraction en présence de l'excitation dudit second capteur (2a, 2b) tout en permettant le fonctionnement desdits moyens d'entraînement (4a, 4b) dans la direction de l'avance.

4. Système de sécurité selon l'une quelconque des revendications précédentes, caractérisé en ce que ledit premier et/ou second capteur (1a, 1b, 2a, 2b) est un commutateur à plateau qui devient actif quand il est exposé à une charge.
